# EUROPÄISCHE PATENTSCHRIFT

(11) **EP 1 110 013 B1**
(45) Veröffentlichungstag und Bekanntmachung des Hinweises auf die Patenterteilung: **05.12.2001**
(21) Anmeldenummer: 99944596.8
(22) Anmeldetag: 03.09.1999
(51) Int. Cl.: F16H 57/02

(54) **AXIALLAGERUNG FÜR ZAHNRÄDER**
AXIAL BEARING FOR TOOTHED WHEELS
SYSTEME DE PALIERS AXIAUX POUR ROUES DENTEES

(30) Priorität: 09.09.1998 DE 19841130
(43) Veröffentlichungstag der Anmeldung: 27.06.2001
(73) Patentinhaber: ZF FRIEDRICHSHAFEN Aktiengesellschaft, 88038 Friedrichshafen (DE)
(72) Erfinder: BADER, Josef, D-88045 Friedrichshafen (DE); RAUTER, Jürgen, D-88045 Friedrichshafen (DE); RENNER, Stefan, D-78351 Bodman-Ludwigshafen (DE)
(86) Internationale Anmeldenummer: EP9906495
(87) Internationale Veröffentlichungsnummer: WO0014432

(56) Entgegenhaltungen:
- EP-A- 0 841 501
- DE-A- 19 633 281
- FR-A- 2 176 409
- GB-A- 889 871

## Beschreibung

Die Erfindung betrifft die Lagerung von Zahnrädern nach dem Oberbegriff von Anspruch 1.

Bei Getrieben mit schrägverzahnten Zahnrädern werden die Zahnräder von einer aus der Schrägverzahnung hervorgerufenen Axialkraft beaufschlagt. Insbesondere bei Getrieben mit mehreren Vorgelegewellen zur Lastverteilung tritt bei dem Zahnrad der zweiten Konstante, das im Bereich zwischen der Eingangswelle und einer in, an oder auf der Eingangswelle gelagerten Hauptwelle angeordnet ist, ein Problem in verschiedenen Lastzuständen auf, daß die Lagerung dieses Zahnrades von den auftretenden Axialkräften verformt wird. Die mit einem leichten radialen Spiel auf der Eingangswelle oder der Hauptwelle angeordneten Zahnräder bei Getrieben mit mehreren identischen Vorgelegewellen zur Lastverteilung sind radial in den auf den Vorgelegewellen angeordneten Zahnrädern gelagert. Sie bedürfen jedoch einer axialen Lagerung, damit sie ihre axiale Position auf der jeweiligen Welle nicht verlassen. Die Axialkräfte aus der Schrägverzahnung versuchen jedoch, die Position des Zahnrades axial zu verschieben.

Es werden im wesentlichen drei Betriebszustände unterschieden:

Im ersten, unkritischen Betriebszustand wird das Drehmoment von der Eingangswelle des Getriebes über das Zahnrad der ersten Konstante auf die Vorgelegewelle übertragen. Dabei wird die Axiallagerung relativ gleichmäßig belastet.

Die axialen Kräfte wirken sich aber in den beiden anderen Betriebszuständen besonders negativ aus. Dies ist zum einen der Betriebszustand, bei dem der Drehmomentenfluß von der Eingangswelle des Getriebes über das Zahnrad der zweiten Konstante auf die Vorgelegewellen übertragen wird. Von dort wird das Drehmoment dann auf ein beliebiges, mit der Hauptwelle verbindbares Zahnrad übertragen. Der zweite problematische Betriebszustand wird dann erreicht, wenn zur Bildung einer Übersetzungsstufe die Eingangswelle mit der Hauptwelle über die Zahnräder der ersten und zweiten Konstante verbunden wird und das Drehmoment über die Zahnräder der beiden Konstanten fließt.
Die im ersten Betriebszustand auftretende Axialkraft versucht, das Zahnrad der zweiten Konstante axial in Richtung weg von der Eingangswelle zu bewegen. Die im zweiten Betriebszustand auftretende Axialkraft versucht, das Zahnrad der zweiten Konstante axial in Richtung hin zur Eingangswelle zu bewegen. In beiden Fällen führen die Axialkräfte zu einer Schiefstellung der Axiallagerung des Zahnrades der zweiten Konstante.

Aus der DE 196 33 281 ist eine Axiallagerung für das Zahnrad der zweiten Konstante bekanntgeworden. Die dort verwendete Scheibe ist von zwei Rollenlagern seitlich eingefaßt. Die Axialkräfte führen zu einer Schiefstellung der Scheibe und dies führt zu einer Beschädigung der Rollenlager in Form von Kantenträgern mit der Folge einer deutlich reduzierten Lebensdauer der Lager.

Der Erfindung liegt die Aufgabe zugrunde, eine Lagerung aufzuzeigen, die die Probleme der Schiefstellung für die Rollenlager beseitigt.

Die Aufgabe wird gelöst mit einer Lagerung mit den Merkmalen des Anspruchs 1. Ausgestaltungen sind Gegenstand von Unteransprüchen.

Erfindungsgemäß wird bei einem Zahnrad eines Zahnradgetriebes im Bereich zwischen einer ersten Welle und einer zweiten Welle, insbesondere der Eingangswelle und der Hauptwelle des Getriebes, die im wesentlichen koaxial und mit unterschiedlichen Drehzahlen zueinander drehbar sind, das Zahnrad auf einem Mittel angeordnet, insbesondere einer Scheibe zwischen einem ersten und einem zweiten Axiallager, und zum Ausgleich von Axialkräften in Richtung der Rotationsachse der Wellen werden zwischen der ersten Welle und dem ersten Axiallager und zwischen dem zweiten Axiallager und der zweiten Welle je eine Scheibe vorgesehen, die die jeweilige Welle in einer Linie berühren und mit denen um diese Linien tellernde Bewegungen ausführbar sind. Unter einer tellernden Bewegung ist zu verstehen, daß die ebene Scheibe unter Einwirkung der Axialkraft eine Verformung zu einer kegelförmigen Ringscheibe erfährt, was ihr eine ähnliche Kontur wie einer Tellerfeder verleiht.

In einer vorteilhaften Ausgestaltung sind an den Wellen mit einem Radius versehene Anlagebereiche ausgebildet, die die linienförmige Berührung zwischen der Scheibe und der Welle ermöglichen. Die Anlagebereiche können direkt an der Welle ausgebildet oder vorteilhaft, zumindest teilweise, an einem Bauteil vorgesehen sein, das mit einer Welle verbunden ist.
Vorteilhafterweise lassen sich der Radius der Anlagebereiche und die Dicke der Scheibe an die auftretenden Axialkräfte anpassen.

Mit der erfindungsgemäßen Lagerung lassen sich die Schiefstellungen, die aus den Axialkräften resultieren, insbesondere aus der Schrägverzahnung der Zahnräder, aufnehmen und von den Axiallagern, insbesondere den Rollenlagern zwischen den Wellen, fernhalten.

Die Erfindung wird anhand einer Zeichnung näher erläutert.

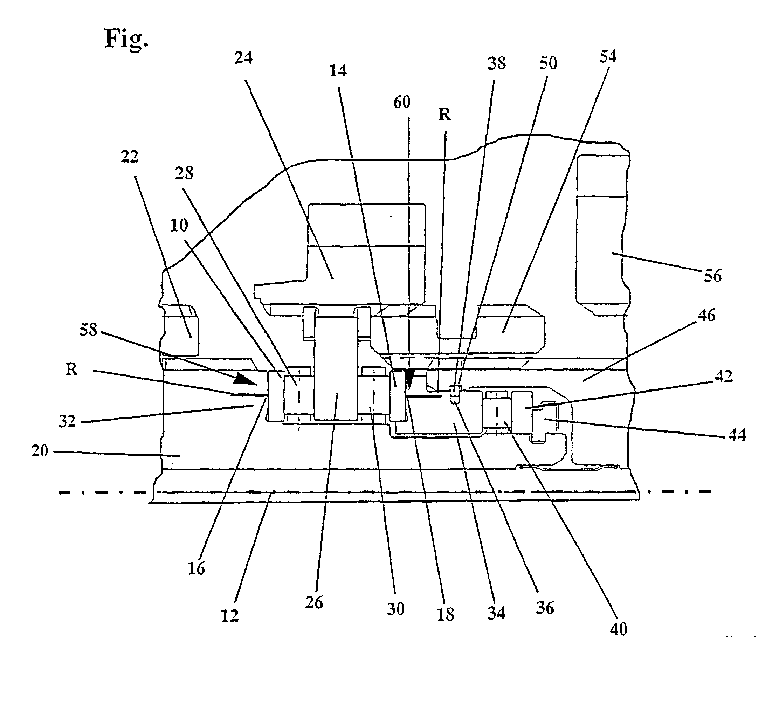

Die einzige Figur zeigt einen Ausschnitt aus dem Getriebe mit der Lagerung.

Eine erste Welle 20 trägt eine hier nur teilweise gezeigte Schiebemuffe 22, die außer in eine Neutralstellung in eine drehmomentübertragende Stellung zwischen der Welle 20 und einem Zahnrad 24 in der Zeichnungsebene nach "Rechts" geschaltet werden kann. Das Zahnrad 24 stellt ein Zahnrad der zweiten Konstante des Getriebes dar. Die Welle 20 ist um eine Rotationsachse 12 drehbar. Das Zahnrad 24 wird auf der Welle 20 von einer Scheibe 26 radial und axial gehalten. Die Scheibe 26 ist von zwei Rollenlagern 28 und 30 axial eingefaßt, wodurch sich die Scheibe 26 und damit das Zahnrad 24 relativ zur Welle 20 frei drehen kann. Die Scheibe 26 stützt sich axial in eine Richtung über das Rollenlager 28 zunächst an einer Scheibe 10 ab, die wiederum an einem Vorsprung 32 der Welle 20 anliegt. Auf der axial gegenüberliegenden Seite stützt sich die Scheibe 26 über das Rollenlager 30 zunächst an einer Scheibe 14 ab, die wiederum an einem Ring 34 anliegt. Der Ring 34 weist eine Aussparung 36 auf, in die ein Sicherungsring 38 eingreift und in der dieser geführt wird. Der Ring 34 wird axial auf der dem Rollenlager 30 gegenüberliegenden Seite durch ein weiteres Rollenlager 40 und eine daran angrenzende Scheibe 42 gehalten, die wiederum auf der Welle 20 durch einen Sicherungsring 44 fixiert ist.

Der Ring 34 liegt über einen Teil seiner axialen Ausdehnung radial innerhalb einer zweiten Welle 46, die ebenfalls um die Rotationsachse 12 drehbar ist. Der Sicherungsring 38 liegt in einer Aussparung 50 in der Welle 46, deren Abmessungen denen der Aussparung 36 entspricht. Die Welle 46 trägt eine Klauenkupplung 54, die mit der Welle 46 drehfest verbunden ist. Die Klauenkupplung 54 ist in einer Stellung gezeigt, die eine direkte Drehmomentübertragung zwischen der ersten Welle 20 und der zweiten Welle 46 ermöglicht, wobei das Drehmoment von der Welle 20 über die mit der Welle 20 drehfest verbundene Schiebemuffe 22 und das Zahnrad 24 zunächst auf die Klauenkupplung 54 und dann von dort auf die Welle 46 übertragen wird. Die Klauenkupplung 54 läßt sich weiterhin aus der Neutralstellung in der Zeichnungsebene nach "Rechts" verschieben zur Bildung einer Verbindung zwischen der Welle 46 und einem hier nur angedeuteten Zahnrad 56.

Die Anlagebereiche 58, 60 zwischen der Scheibe 10 und dem Vorsprung 32 an der Welle 20 einerseits und zwischen der Scheibe 14 und dem Ring 34 andererseits sind mit einem Radius R ausgebildet. Auf der einen Seite trägt der Vorsprung 32 diesen Radius R und auf der anderen Seite der Ring 34. Durch den Radius R wird eine linienförmige Berührung mit den Scheiben 10 und 14 erzielt. Diese Linie 16, 18 stellt jeweils einen Kreis um die Rotationsachse 12 dar.

### Bezugszeichen

- 10: Scheibe
- 12: Rotationsachse
- 14: Scheibe
- 16: Linie
- 18: Linie
- 20: Welle
- 22: Schiebemuffe
- 24: Zahnrad
- 26: Scheibe
- 28: Rollenlager
- 30: Rollenlager
- 32: Vorsprung
- 34: Ring
- 36: Aussparung
- 38: Sicherungsring
- 40: Rollenlager
- 42: Scheibe
- 44: Sicherungsring
- 46: Welle
- 50: Aussparung
- 54: Klauenkupplung
- 56: Zahnrad
- 58: Anlagebereich
- 60: Anlagebereich

- R: Radius

## Patentansprüche

1. Lagerung für ein Zahnrad (24) eines Zahnradgetriebes im Bereich zwischen einer ersten Welle (20) und einer zweiten Welle (46), die im wesentlichen koaxial und mit unterschiedlichen Drehzahlen zueinander drehbar sind, mit einem zwischen einem ersten (28) und einem zweiten Axiallager (30) vorgesehenen Mittel (26), auf dem das Zahnrad (24) angeordnet ist zum Ausgleich von Axialkräften in Richtung der Rotationsachse (12) der Wellen (20, 46), **dadurch gekennzeichnet, daß** zwischen der ersten Welle (20) und dem ersten Axiallager (28) und zwischen dem zweiten Axiallager (30) und der zweiten Welle (46) je eine Scheibe (10, 14) vorgesehen ist, die die jeweilige Welle (20, 46) in einer Linie (16, 18) berühren und mit den Scheiben (10, 14) um diese Linien (16, 18) tellernde Bewegungen ausführbar sind.

2. Lagerung für ein Zahnrad (24) nach Anspruch 1, **dadurch gekennzeichnet, daß** an den Wellen (20, 46) mit einem Radius (R) versehene Anlagebereiche (58, 60) ausgebildet sind, die die linienförmige Berührung zwischen der Scheibe (10, 14) und der Welle (20, 46) ermöglichen.

3. Lagerung für ein Zahnrad (24) nach Anspruch 2, **dadurch gekennzeichnet, daß** ein Anlagebereich (60) an einem Bauteil (34) vorgesehen ist, das mit einer Welle (46) verbunden ist.

4. Lagerung für ein Zahnrad (24) nach Anspruch 2, **dadurch gekennzeichnet, daß** der Radius (R) des Anlagebereichs (58, 60) und die Dicke der Scheibe (10, 14) an die auftretenden Axialkräfte anpaßbar sind.

## Claims

1. Bearing for a toothed wheel (24) of a toothed gear in the area between a first shaft (20) and a second shaft (46), with each shaft capable of rotating coaxially and at different speeds in relation to the other, whereby between a first (28) and a second axial bearing (30) a plate (26) is provided, on which the toothed wheel (24) is arranged for compensation of axial forces acting in the direction of the axis of rotation (12) of the shafts,
**characterized**
**in that** between the first shaft (20) and the first axial bearing (28) and between the second axial bearing (30) and the second shaft (46) respectively there are disks (10, 14) touching the respective shaft (20, 46) along lines (16, 18), whereby the disks (10, 14) can perform swaying movements around these lines (16, 18).

2. Bearing for a toothed wheel (24) according to claim 1,
**characterized**
**in that** the shafts (20, 46) feature contact areas (58, 60) with a radius (R), with these areas permitting the linear-formed contact between the disk (10, 14) and the shaft (20, 46).

3. Bearing for a toothed wheel (24) according to claim 2,
**characterized**
**in that** a contact area (60) is provided on a component (34) which is connected to a shaft (46).

4. Bearing for a toothed wheel (24) according to claim 2,
**characterized**
**in that** the radius (R) of the contact area (58, 60) as well as the thickness of the disk (10, 14) can be adapted to the axial forces present.

## Revendications

1. Support d'un engrenage (24) d'une boîte de vitesses à engrenages situé dans la zone entre un premier arbre (20) et un deuxième arbre (46), sachant que chacun des arbres peut tourner coaxialement et à des vitesses différentes l'un par rapport à l'autre, et sachant que le support est pourvu d'un élément (26) positionné entre un premier roulement axial (28) et un deuxième roulement axial (30), sur lequel est logé l'engrenage (24) pour compenser les efforts axiaux dans le sens de l'axe de rotation (12) des arbres (20, 46), **caractérisé en ce que** entre le premier arbre (20) et le premier roulement axial (28) et entre le deuxième roulement axial (30) et le deuxième arbre (46) soient prévus des disques (10,14) qui touchent l'arbre correspondant le long d'une ligne (16,18) et **en ce que**, avec ces disques (10, 14), soient possibles des mouvements circulaires autour de ces lignes (16, 18).

2. Support d'un engrenage (24) selon la revendication 1, **caractérisé en ce que** sur les arbres (20, 46) soient réalisés des surfaces d'appui (58, 60) pourvues d'un rayon (R), qui permettent le contact entre le disque (10, 14) et l'arbre (20, 46).

3. Support d'un engrenage (24) selon la revendication 2, **caractérisé en ce que** une surface d'appui (60) soit prévue sur un élément (34) qui est lié à l'arbre (46).

4. Support d'un engrenage (24) selon la revendication 2, **caractérisé en ce que** le rayon (R) de la surface d'appui (58, 60) et l'épaisseur du disque (10, 14) soient adaptables en fonction des forces axiales existantes.
